# EUROPÄISCHE PATENTSCHRIFT

(11) **EP 1 021 644 B1**
(45) Veröffentlichungstag und Bekanntmachung des Hinweises auf die Patenterteilung: **12.03.2003**
(21) Anmeldenummer: 98955367.2
(22) Anmeldetag: 02.10.1998
(51) Int. Cl.: F01N 5/02, F01N 1/08

(54) **ABGASWÄRMETAUSCHER**
WASTE GAS HEAT EXCHANGER
ECHANGEUR DE CHALEUR DE GAZ BRULES

(30) Priorität: 07.10.1997 DE 19744178
(43) Veröffentlichungstag der Anmeldung: 26.07.2000
(73) Patentinhaber: Wegra Anlagenbau GmbH, 98631 Westenfeld (DE)
(72) Erfinder: WEIDNER, Roland, D-98547 Schwarza (DE)
(86) Internationale Anmeldenummer: DE9802950
(87) Internationale Veröffentlichungsnummer: WO99018334

(56) Entgegenhaltungen:
- EP-A- 0 283 763
- EP-A- 0 525 757
- DE-A- 4 325 193
- GB-A- 345 895

## Beschreibung

Die Erfindung betrifft einen Abgaswärmetauscher, insbesondere für Blockheizkraftwerke, mit einer Brennkraftmaschine zum Antrieb eines Generators, wobei die Abwärme der Abgase der Brennkraftmaschine dem Abgaswärmetauscher zur Weiterverwertung zugeführt wird.

Im allgemeinen werden Blockheizkraftwerke in Gebäuden betrieben. Daher wird von Seiten der Hersteller besonderer Wert auf die Wärmerückgewinnung und die Schalldämmung gelegt.
Im Stand der Technik sind bereits mehrere Schutzrechte vorbeschrieben, welche sich mit der Wärmerückgewinnung und der Schalldämmung von Abgasen bei Brennkraftmaschinen beschäftigen.
So beschreibt beispielsweise die GB 345 895 A einen Auspuff - Schalldämpfer mit hohlen Gehäusewänden durch die gekühltes Wasser zirkulieren kann.
Im Innenrohr ist ein oder sind zwei kegelförmige sich in Strömungsrichtung vergrößernde Stützrohre angeordnet, auf dem/denen sich jeweils eine in Strömungsrichtung verjüngende, zwischen Innenteil und zylindrischem Außenmantel angeordnete Schneckenwendel befindet.
Bei zwei im selben Doppelmantelrohr angeordneten, kegelförmigen Stützrohren wechselt von einem zum anderen kegelförmigen Stützrohr die Anstiegsrichtung der dem jeweiligen Stützrohr zugeordneten Schneckenwendel.

Die Abgasströmung wird tangential zum Außenmantel in einen vor der Schneckenwendel liegenden Freiraum zugeführt, über den mit der Schneckenwendel versehenen Außenmantel des kegeligen Stützrohres in den Innenraum des kegeligen Stützrohres eingeleitet, und über diesen Innenraum des Stützrohres aus dem Schalldämpfer herausgeführt.
Die DE OS 29 09 530 beschreibt einen schallgedämmten Abgaswärmetauscher bei welchem ein zwischen zwei rohrförmigen Bauteilen strömendes Kühlmedium der Abkühlung der durch das Innenrohr strömenden Abgase dient. Im Innenrohr sind dabei scheibenförmige Konstruktionsteile eingeschweißt, die dem zu kühlenden Abgas den Durchtritt durch die Scheibenebenen, abwechselnd am Rand und in der Mitte, der scheibenförmigen Konstruktionsteile erlauben. Der wesentliche Nachteil dieser Bauform besteht darin, dass sich bei längerer Betriebszeit die Wärmeübertragung deutlich verschlechtert. Dies resultiert aus den sich zwangsläufig am Innenrohr bildenden Rußablagerungen, da aufgrund der vorgeschlagenen erfindungsgemäßen Konstruktion das verrußte Innenrohr nicht gereinigt werden kann.
Um derartige Nachteile zu beseitigen hat man sich beispielsweise in der DE 43 25 193 die Aufgabe gestellt eine Vorrichtung zum Austausch von Wärme zu entwickeln, welche einfach und kostengünstig herstellbar ist und gleichzeitig eine einfache Wartung und Reinigung ermöglicht. Dies wird bei der vorgenannten Lösung dadurch erreicht, dass ein Metall - oder Kunststoffband welches wendelartig über seine Längsmittenachse gedreht ist, mit seinen Außenkanten so an der Innenfläche eines rohrförmigen Körpers anliegt, dass einerseits ein guter Wärmeübergang entsteht und andererseits beim Herausziehen der Leitvorrichtung aus der verschließbaren Öffnung die Ablagerungen von der Innenwand des rohrförmigen Körpers abgekratzt, und somit gleichzeitig durch die vg. verschließbare Öffnung nach außen befördert werden.

Ein wesentlicher Nachteil dieser speziellen Bauform besteht darin, dass zur Gewährleistung der angestrebten guten Wärmeübertragung stets die Rußablagerungen an der die Wärme übertragenden Innenwand in relativ kurzen Zeitabständen durch Herausziehen der Leitvorrichtung entfernt werden müssen. Ein anderer wesentlicher Nachteil der vorbeschriebenen Bauform besteht darin, dass die in der DE 43 25 193 beschriebenen Vorrichtung insbesondere bei größeren Blockheizkraftwerken nicht verwendet werden kann, da deren Einsatz insbesondere in Verbindung mit Motoren höherer Leistung einen für eine effektive Wärmerückgewinnung zu hohen Abgasgegendruck zur Folge hat.
Darüber hinaus muss bei Einsatz eines in der DE 43 25 193 vorbeschriebenen Wärmetauschers in Blockheizkraftwerken auch mit kleineren Motoren zwangsläufig stets ein Schalldämpfer nachgeschaltet werden. Auf Grund dieser zwangsläufig notwendigen Anordnung eines Schalldämpfers steigt das Bauvolumen des Blockheizkraftwerkes. Gleichzeitig wird die Zugänglichkeit zu den anderen Baugruppen des Blockheizkraftwerkes, wie zum Motor oder zum Generator insbesondere bei Wartungs- und Reparaturarbeiten deutlich verschlechtert.
Um nun eine gleichzeitige optimale Wärme- und Schalldämmung für Blockheizkraftwerke zu erreichen beschreibt das DE GM 94 05 466.5 ein Blockheizkraftwerk bei welchem die Brennkraftmaschine und der Generator allseitig von einem den Betriebsraum bildenden Innenbehälter umgeben sind. Der Innenbehälter selbst ist in einem Wassermantel schwimmend gelagert.
Diese Bauform hat jedoch den Nachteil, dass die Strahlungswärme des Motors (etwa 85°C bis 90°C) stets auf die im Innenbehälter angeordneten Baugruppen, wie beispielsweise die Kupplung und den Generator, voll übertragen wird. Diese Baugruppen werden dadurch zwangsläufig thermisch überbeansprucht.
Die EP 0283 763 beschreibt eine Kraft-Wärme-Kopplungsanlage mit einer im Aggregatstuhl angeordneten wartungsfreundliche Reihenschaltung von zwei axial hintereinander angeordneten Bauteilen eines Schalldämpfers und zwei axial hintereinander angeordneten Bauteilen eines Abgaswärmetauschers.

Der Erfindung liegt die Aufgabe zugrunde einen Abgaswärmetauscher strömungstechnisch zu verbessern, um eine optimale Wärmeübertragung, eine definierte Rußabscheidung und eine wesentliche Reduzierung des Abgasgegendruckes bei minimalem Platzbedarf zu erzielen.

Erfindungsgemäß wird diese Aufgabe durch einen schallgedämmten Abgaswärmetauscher mit den Merkmalen des Anspruches 1 gelöst.
Erfindungswesentlich ist dabei, dass dieser aus mehreren Doppelmantelrohren besteht, in deren Innenrohre sich auf Stützrohren angeordnete Schneckenwendel, mit von Doppelmantelrohr zu Doppelmantelrohr wechselnder "Anstiegsrichtung" (rechtssteigend bzw. linkssteigend) befinden, wobei der Abgaseintritt in den Abgaswärmetauscher wie auch die Abgasführung von einem zum nächsten Doppelmantelrohr tangential erfolgt.
Überraschenderweise hat sich gezeigt, dass diese erfindungsgemäße tangentiale Abgaszu- und Abgasabführung, in Verbindung mit der erfindungsgemäßen Anordnung von Schneckenwendeln auf Stützrohren im Innenrohr des von der Kühlflüssigkeit durchflossenen Doppelmantelrohres, eine deutliche strömungstechnische Verbesserung des Abgaswärmetauschers zur Folge hat, und dabei eine wesentliche Reduzierung des Abgasgegendruckes, eine nicht zu erwartende definierte Rußabscheidung im stützrohrnahen Bereich der Schneckenwendel, und gleichzeitig eine Optimierung der Wärmeübertragung bei minimalem Platzbedarf bewirkt.
Überraschenderweise wird durch die erfindungsgemäße Lösung bewirkt, daß sich auf der Innenwand des Doppelmantelrohres nahezu kein Ruß abscheidet, so daß stets eine optimale Übertragung der Wärmeenergie des Abgases auf das Innenrohr und demzufolge auf das das Doppelmantelrohr durchfließende Kühlmittel stattfindet.
Darüber hinaus bewirkt die erfindungsgemäße Abgasführung welche sich auch durch eine von Doppelmantelrohr zu Doppelmantelrohr wechselnden "Anstiegsrichtung" der Schneckenwendel auszeichnet ( d.h. auf beispielsweise eine rechtsgängige Schneckenwendel folgt in Strömungsrichtung im nachfolgend durchströmten Rohr eine linksgängige Schneckenwendel usw. ), überraschenderweise eine sehr wesentliche Reduzierung des Abgasgegendruckes bei optimaler Wärmeübertragung.
Durch die erfindungsgemäße Lösung wird es somit auch möglich das Abgas über wesentlich längere Wegstrecken durch den erfindungsgemäßen Wärmetauscher zu leiten und demzufolge eine deutlich verbesserte Wärmeübertragung bei gleichzeitiger Minimierung des Bauvolumen zu gewährleisten.
Auf Grund der durch die erfindungsgemäße Lösung ermöglichten, das Bauvolumen optimal ausnutzenden Anordnung der Doppelmantelrohre wird selbst bei Motoren mit hoher Motorleistung bei minimalem Platzbedarf eine optimale Wärmeübertragung (bei sehr niedriger Abgasendtemperatur) gewährleistet.
Für spezielle Einsatzfälle ist es vorteilhaft, daß an den Doppelmantelrohren der Kühlmitteleinlassquerschnitt kleiner als der Kühlmittelauslassquerschnitt ausgebildet wird. Durch diese konstruktive Maßnahme wird es möglich den Wärmetauscher beispielsweise auch für Kälteanlagen als Verdampfer einzusetzen.
Vorteilhaft ist weiterhin, wenn der Abgaseintritt in den Abgaswärmetauscher und die Abgasführung zum nachgeschalteten Doppelmantelrohr sowohl tangential wie auch gleichzeitig in Strömungsrichtung zur Längsachse des Doppelmantelrohres in Richtung der Steigung der Schneckenwendel des Abgaswärmetauschers geneigt erfolgt.

Durch diese Maßnahme wird dann der Abgasgegendruck nochmals deutlich verringert, wodurch alle erfindungsgemäßen Vorzüge noch besser genutzt werden können.
Vorteilhaft ist auch, wenn zur Gewährleistung eines optimalen Kondensatablaufes die Doppelmantelrohre in Abgasströmungsrichtung geneigt angeordnet sind.
Vorteilhaft ist es auch wenn den Doppelmantelrohren, in welchen die auf Stützrohren angeordneten Schneckenwendel angeordnet sind, ein oder mehrere Doppelmantelrohre vorzugsweise gleicher Dimensionierung nachgeschaltet sind, in denen Schalldämpfungselemente angeordnet werden können.
Diese nachgeordnete Anordnung des Schalldämpfers bewirkt eine, gegenüber eines zwischengeschalteten Schalldämpfers, deutliche Verringerung des Abgasgegendruckes bei gleichzeitiger effektiver Schallreduzierung.
Aufgrund einer vorzugsweise gleichartigen Dimensionierung der Doppelmantelrohre ist es möglich von Einsatzfall zu Einsatzfall Schneckenwendel auch gegen Schalldämpfungselemente auszutauschen um so stets eine optimale Absenkung des Schalldruckpegels zu gewährleisten.
Vorteilhaft ist auch, wenn die auf den Stützrohren angeordneten Schneckenwendel mit den Revisionsflanschen starr verbunden sind, wobei die Revisionsflansche vorzugsweise mittels Schnellverschlüssen mit dem Doppelmantelrohr lösbar verbunden sein können. Diese spezielle Anordnung ermöglicht die Reinigung der mit Schneckenwendeln versehenen Stützrohre durch ein einfaches Herausziehen derselben aus dem Doppelmantelrohr und gewährleistet so einen minimalen Wartungsaufwand des Wärmetauschers.
Dabei erhöht die unlösbare Verbindung zwischen Wendel und Revisionsflansch nicht nur die Ergonomie der Baugruppe sondern verringert gleichzeitig deutlich den Reinigungsaufwand. Die zusätzliche Anordnung von Schnellverschlüssen am Doppelmantelrohr vermindert dabei insbesondere die Verbrennungsgefahr während der Instandhaltungsarbeiten und führt zu einer nochmaligen Zeitersparnis bei den Reinigungs- und Prüfarbeiten.
Vorteilhaft ist, wenn ebenso wie der Abgasein - und Abgasaustritt auch der Kühlmitteleinlass und der Kühlmittelauslass der Doppelmantelrohre des schallgedämmten Abgaswärmetauschers tangential zum Außenmantel des Doppelmantelrohres und insbesondere gleichzeitig zur Längsachse des Doppelmantelrohres in Strömungsrichtung geneigt erfolgt.
Auf Grund der tangentialen Kühlmitteleinleitung wird im Gegenstromprinzip zur Abgasströmungsrichtung eine "Umwirbelung" des Innenrohres durch das Kühlmittels bewirkt, wodurch aufgrund der in Strömungsrichtung geneigten Einleitung dieser "Umwirbelungs"- Effekt nochmals optimiert und gleichzeitig der Strömungswiderstand des Gesamtkühlsystems deutlich verringert wird, so dass eine wesentlich verbesserte Wärmeausbeute erreicht werden kann.
Vorteilhaft ist auch, wenn der Abgaseintritt der vom Verbrennungsmotor kommenden Abgase zuerst beispielsweise in ein in seinen Wandungen speziell für Heißdampf dimensioniertes Doppelmantelrohr mit separaten Kondensateintritt und Dampfaustritt erfolgt, wobei die aus diesem verstärkten Doppelmantelrohr abgeleiteten Abgase weiteren Doppelmantelrohren zugeleitet werden können, die beispielsweise an einem Warmwasserkreislauf angeschlossen sind. Durch die Anordnung von den auf Stützrohren angeordneten Schneckenwendeln in den Doppelmantelrohren wird in Verbindung mit der erfindungsgemäßen tangentialen Abgasführung selbst beim Vorschalten eines solchen Verdampfers zur Heißdampferzeugung der Abgasgegendruck nicht unzulässig erhöht. Der wesentliche Vorteil einer solchen Anordnung besteht jedoch insbesondere darin, dass vom Abgaswärmetauscher neben dem Warmwasserkreislauf auch gleichzeitig ein Dampfkreislauf bedient werden kann. Dadurch wird nicht nur der Platzbedarf minimiert, sondern es entfallen gleichzeitig auch die für einen Verdampfer mit seinen speziellen, kostenaufwendigen Heißmotoren zwangsläufig erforderlichen zusätzlichen Aufwendungen.

Des weiteren können als Schalldämpfungselemente im Innenrohr mehrere Rohrstücke gleichen und oder unterschiedlichen Durchmessers zur effektiven Schallreduzierung zueinander versetzt angeordnet sein.
Vorteilhafterweise besitzen diese Schalldämpfungselemente selbst einen großen Durchlassquerschnitt und sind zudem mit Bohrungen quer zur Abgasströmungsrichtung versehen. Diese spezielle Ausbildung bewirkt neben einer effektiven Schallreduzierung und einer deutlichen Reduzierung des Abgasgegendruckes auch eine merkliche Absenkung des Gesamtdruckverlustes des Abgaswärmetauschers.
Darüber hinaus sind die Schalldämpfungselemente miteinander gekoppelt und vorzugsweise mit den Revisionsflansche starr verbunden, wobei auch deren Revisionsflansche mittels Schnellverschlüssen mit dem Doppelmantelrohr lösbar verbunden sein können.
Auf Grund dieser "lösbaren" Anordnung der Schalldämpfungselemente im Doppelmantelrohr wird ebenfalls ein einfaches Herausziehen derselben aus dem Doppelmantelrohr ermöglicht und dadurch die einfachen Reinigung und Wartung der Schalldämpfungselemente gewährleistet.
Vorteilhafterweise kann unmittelbar nach dem Abgaseintritt in das jeweilige Doppelmantelrohr ein Teilstück der auf einem Stützrohr angeordneten Schneckenwendel mit einem sich in Strömungsrichtung vergrößernden Anstieg versehen sein. Diese Maßnahme bewirkt nun eine nochmalige Verringerung des Abgasgegendruckes. Der Einsatz derartiger Schneckenwendel ist insbesondere bei Motoren mit einer hohen Motorleistung empfehlenswert.
Weiterhin kann an einem oder auch an mehreren der unter - und / oder nebeneinander angeordneten und in Reihe geschalteten Doppelmantelrohre des Abgaswärmetauschers, mit in Strömungsrichtung des Abgases versehenem Gefälle, jeweils ein Kondensatablauf angeordnet sein.
Dadurch wird selbst bei extrem niedrigen Rücklauftemperaturen eine optimale, auch mehrmalige Abführung des anfallenden Kondensates (hauptsächlich bei Gasanlagen) ermöglicht.

Weiterhin können bei in Reihe geschalteten, unter - und nebeneinander angeordneten Doppelmantelrohren diese sowohl horizontal wie auch vertikal, radial miteinander verbunden sein.
Dies ermöglicht selbst bei einer hohen Anzahl von Wärmeübertragungsrohren eine sehr kompakte Bauweise des erfindungsgemäßen Abgaswärmetauschers.
In einer weiteren vorteilhaften Ausgestaltung kann der gesamte Abgaswärmetauscher als separate Einheit aufgebaut, und mit einer separaten Wärmeisolierung versehen sein. Die dadurch bedingte deutliche Verringerung der Wärmeabstrahlung hat dann eine merkliche Erhöhung des Wirkungsgrades zur Folge.
Weiterhin kann der schallgedämmte Abgaswärmetauscher im Blockheizkraftwerk integriert, am Grundrahmen auch unterhalb des Verbrennungsmotors horizontal angeordnet sein. Diese Anordnung ermöglicht eine optimale Zugänglichkeit aller Baugruppen des Blockheizkraftwerkes und ist besonders dann geeignet, wenn bei den zum Einsatz kommenden Verbrennungsmotoren die Anordnung des Auspuffkrümmers derart ausgebildet ist, daß dieser nach unten führt.
Darüber hinaus kann der schallgedämmte Abgaswärmetauscher im Blockheizkraftwerk integriert, am Grundrahmen auch senkrecht neben dem Verbrennungsmotor angeordnet sein. Auch diese Anordnung ermöglicht eine optimale Zugänglichkeit aller Baugruppen des Blockheizkraftwerkes und eignet sich besonders bei einer räumlich bedingten Begrenzung der Bauhöhe des Blockheizkraftwerkes.
In einer anderen vorteilhaften Ausgestaltung kann der schallgedämmte Abgaswärmetauscher im Blockheizkraftwerk integriert, horizontal oberhalb des Verbrennungsmotors angeordnet sein. Diese sehr spezielle Anordnung der erfindungsgemäßen Lösung bietet sich beim Einsatz von Motoren mit oben liegendem Abgasanschluss oder bei Abgasturboladern an.

Nachfolgend soll nun die erfindungsgemäße Lösung in Verbindung mit neun Figuren an Hand mehrerer Ausführungsbeispiele näher erläutert werden.

Dabei zeigen:
- Figur 1:: die Seitenansicht eines Blockheizkraftwerkes mit seitlich angeordnetem erfindungsgemäßen Abgaswärmetauscher;
- Figur 2:: die Draufsicht auf das in Figur 1 dargestellte Blockheizkraftwerk mit seitlich angeordnetem erfindungsgemäßen Abgaswärmetauscher;
- Figur 3 :: die Vorderansicht des in Figur 1 dargestellten Blockheizkraftwerkes mit seitlich angeordnetem erfindungsgemäßen Abgaswärmetauscher;
- Figur 4 :: die Vorderansicht eines Blockheizkraftwerkes mit unterhalb des Grundrahmens angeordnetem erfindungsgemäßen Abgaswärmetauscher;
- Figur 5: die Vorderansicht eines Blockheizkraftwerkes mit oberhalb des Verbrennungsmotors angeordnetem erfindungsgemäßen Abgaswärmetauscher;
- Figur 6:: die Seitenansicht des erfindungsgemäßen Abgaswärmetauschers im Schnitt;
- Figur 7 :: die Vorderansicht des erfindungsgemäßen Abgaswärmetauschers gemäß Figur 6 im Schnitt bei A - A mit gerader tangentialer Abgasführung;
- Figur 8 :: die Vorderansicht des erfindungsgemäßen Abgaswärmetauschers gemäß Figur 6 im Schnitt bei A - A mit bogenförmiger tangentialer Abgasführung;
- Figur 9:: schematische Darstellung der Abgasführung im Innenrohr des schallgedämmten Abgaswärmetauschers bei tangentialer Abgaseinleitung mit einer auf einem Stützrohr angeordneten Schneckenwendel;
- Figur 10:: die Vorderansicht eines erfindungsgemäßen separaten Abgaswärmetauschers im Teilschnitt;
- Figur 11 :: die Draufsicht auf den in Figur 10 dargestellten erfindungsgemäßen separaten Abgaswärmetauscher im Teilschnitt;
- Figur 12 :: die Seitenansicht des erfindungsgemäßen, separaten Abgaswärmetauschers gemäß Figur 10 im Schnitt bei B - B;
- Figur 13:: die Seitenansicht des erfindungsgemäßen, separaten Abgaswärmetauschers gemäß Figur 10 im Schnitt bei C - C;
- Figur 14 :: die Seitenansicht eines zur Dampferzeugung Verwendung findenden Doppelmantelrohres des erfindungsgemäßen Abgaswärmetauschers im Teilschnitt,

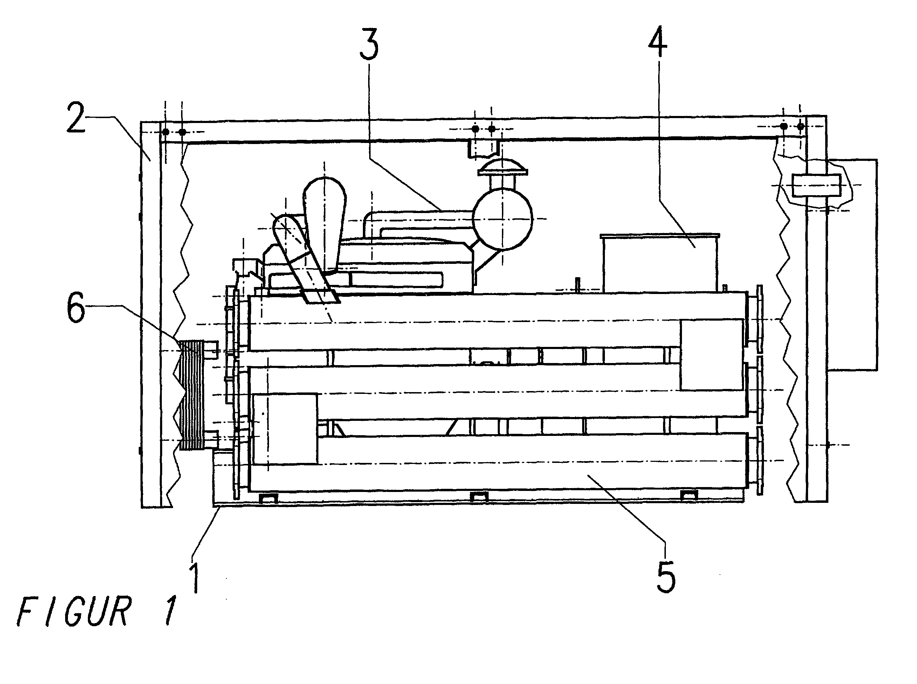

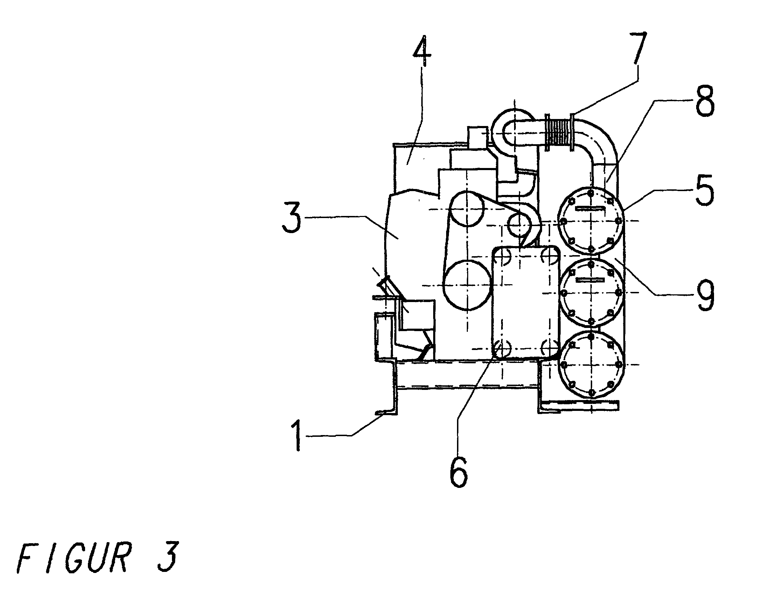

In der Figur 1 ist eine der möglichen Bauformen des erfindungsgemäßen Blockheizkraftwerkes in der Seitenansicht dargestellt.
Auf einem Grundrahmen 1 sind in einer Schallschutzkabine 2, ein Verbrennungsmotor 3, ein Generator 4 sowie seitlich ein erfindungsgemäßer schallgedämmter Abgaswärmetauscher 5 mit jeweils in Abgasströmungsrichtung gering geneigten Doppelmantelrohren und einem Plattenwärmetauscher 6 angeordnet.
Der Plattenwärmetauscher 6 dient dabei der Überführung der Wärme aus dem Kühlmittelkreislauf des Verbrennungsmotors in das Heizungssystem.

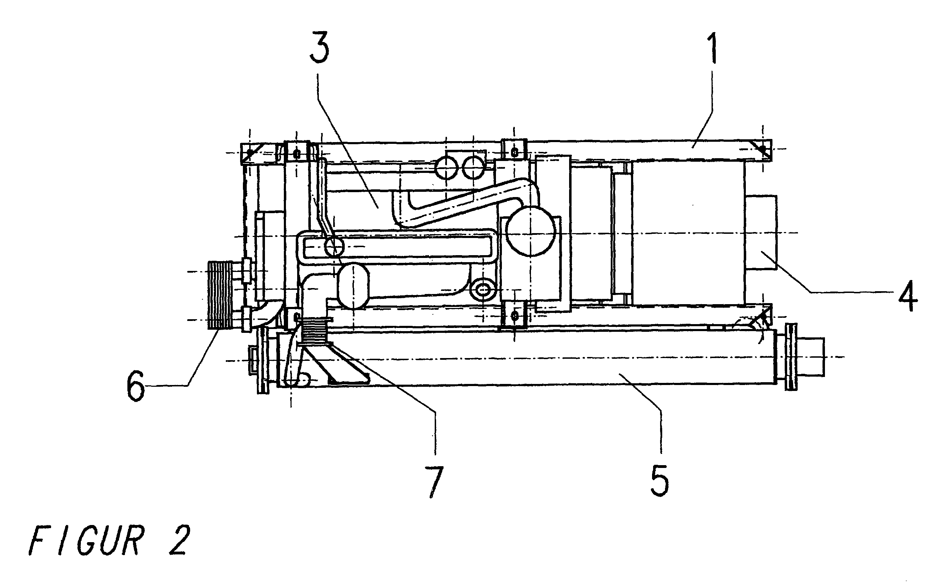

Die Figur 2 zeigt nun die Draufsicht auf das in Figur 1 dargestellte Blockheizkraftwerk ohne Schallschutzkabine mit seitlich angeordnetem, erfindungsgemäßen, schallgedämmten Abgaswärmetauscher. Dabei wird die Anordnung des elastisch gelagerten Generators 4 und des elastisch gelagerten Verbrennungsmotors 3 auf dem Grundrahmen 1 sowie die elastische Verbindung des Verbrennungsmotors 3 mittels eines Kompensators 7 mit dem erfindungsgemäßen schallgedämmten Abgaswärmetauscher 5, wie auch die Anordnung des Plattenwärmetauschers 6 deutlich sichtbar.
Die in der Figur 3 dargestellte Vorderansicht des Blockheizkraftwerkes, gemäß Figur 1, mit seitlich angeordnetem, erfindungsgemäßen schallgedämmten Abgaswärmetauscher zeigt neben der Anordnung des Generators 4, des Motors 3, des Plattenwärmetauschers 6 und des erfindungsgemäßen schallgedämmten Abgaswärmetauschers 5 auf dem Grundrahmen 1 ebenfalls wieder die elastischen Verbindung des Motors 3 mittels eines Kompensators 7 mit dem schallgedämmten Abgaswärmetauscher 5, wie auch den erfindungsgemäßen tangentialen Abgaseintritt 8 und die tangentiale Abgasführung 9.
In dieser Darstellung wird die seitliche Anordnung des schallgedämmten Abgaswärmetauschers deutlich, welche eine optimale Zugänglichkeit zu allen Baugruppen des Blockheizkraftwerkes gewährleistet.

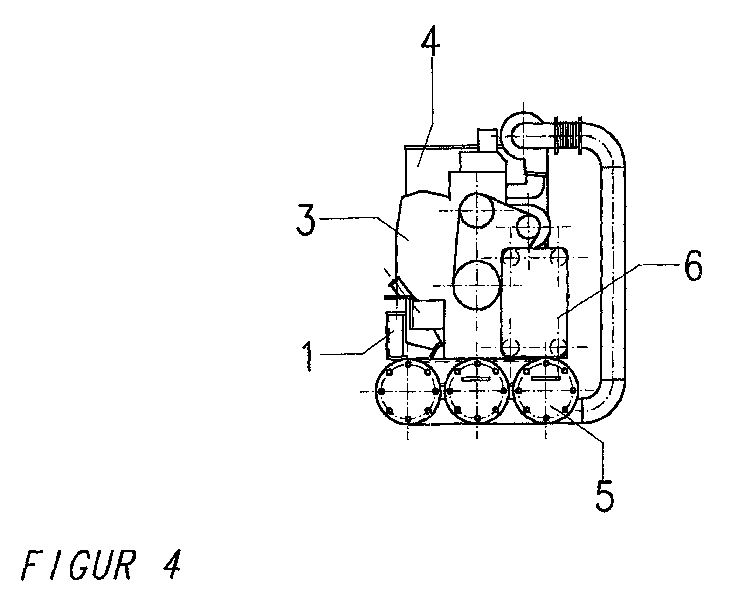

Die Figur 4 zeigt nun die Vorderansicht eines Blockheizkraftwerkes mit unterhalb des Grundrahmens angeordnetem, erfindungsgemäßen schallgedämmten Abgaswärmetauscher.
Diese in der Figur 4 dargestellte Ausführungsform bietet sich insbesondere dann an, wenn die Gesamtabmessungen des Blockheizkraftwerkes möglichst gering gehalten werden sollen.

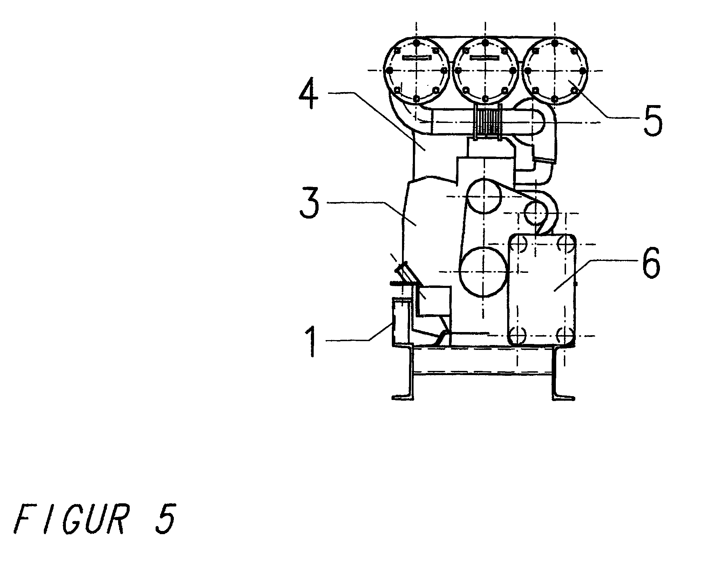

In der Figur 5 ist nun die Vorderansicht eines Blockheizkraftwerkes mit oberhalb des Verbrennungsmotors 3 angeordnetem erfindungsgemäßen schallgedämmten Wärmetauscher 5 dargestellt.
Diese spezielle Anordnung der erfindungsgemäßen Lösung bietet sich beim Einsatz von V-Motoren mit oben liegendem Abgasanschluss oder beim Einsatz von Abgasturboladern an.

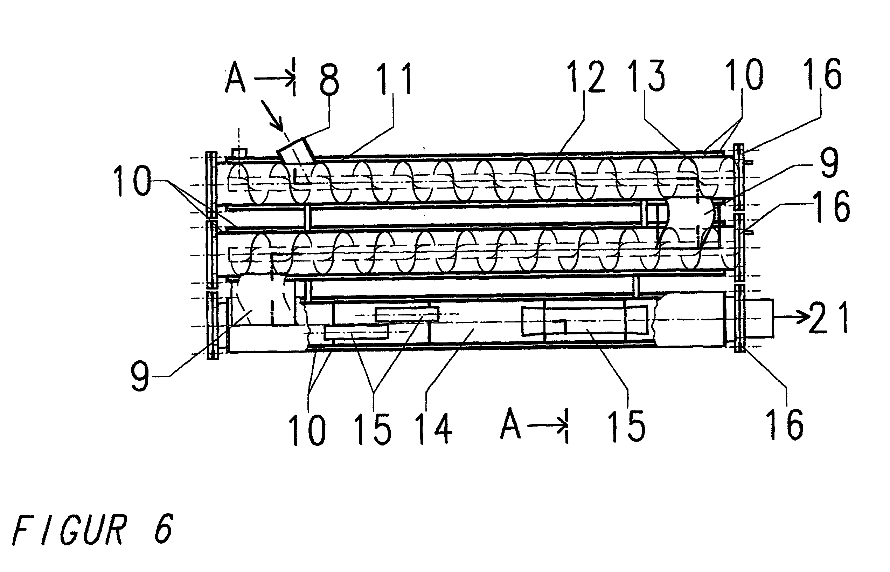

Die Figur 6 zeigt die Seitenansicht des schallgedämmten Abgaswärmetauscher in einer Schnittdarstellung, wobei der erfindungsgemäße Abgaswärmetauscher aus drei in einer Ebene jeweils in Abgasströmungsrichtung gering geneigt nebeneinander angeordneten Doppelmantelrohren 10 besteht.
In zwei der Innenrohre 11 dieser Doppelmantelrohre 10 befinden sich auf Stützrohren 12 angeordnete Schneckenwendel 13 mit von Doppelmantelrohr zu Doppelmantelrohr wechselnden "Anstiegsrichtung" der Schneckenwendel (d.h. auf beispielsweise eine in Strömungsrichtung liegende rechtsgängige Schneckenwendel folgt im nachfolgend durchströmten Doppelmantelrohr eine ebenfalls in Strömungsrichtung liegende linksgängige Schneckenwendel). Diese erfindungsgemäße Anordnung führt zu einer sehr wesentlichen Reduzierung des Abgasgegendruckes bei optimaler Wärmeübertragung. Im dritten Doppelmantelrohr sind als Schalldämpfer 14 Schalldämpfungselemente 15 angeordnet. Der Abgaseintritt 8 in den Abgaswärmetauscher wie auch die Abgasführung 9 erfolgt tangential und ist in Strömungsrichtung geneigt.
Die tangentiale Abgaszu- und Abgasabführung in jedes und aus jedem der Doppelmantelrohre des Wärmetauschers bewirkt, in Verbindung mit den in ihrer Steigungsrichtung von Doppelmantelrohr zu Doppelmantelrohr wechselnden, auf Stützrohren im Innenrohr des von der Kühlflüssigkeit durchflossenen Doppelmantelrohres angeordneten Schneckenwendeln, eine definierte Rußabscheidung im stützrohrnahen Bereich dieser Schneckenwendel bei gleichzeitig deutlich minimierten Abgasgegendruck.
Somit kann auf Grund der erfindungsgemäßen Lösung gewährleistet werden, dass sich auf der Innenwand des Doppelmantelrohres nahezu kein Ruß abscheidet, und daher stets eine optimale Übertragung der Wärmeenergie des Abgases auf das Innenrohr und demzufolge auf das das Doppelmantelrohr durchfließende Kühlmittel stattfindet.
Darüber hinaus führt die beschriebene erfindungsgemäße Abgasführung aufgrund einer sehr deutlichen Reduzierung des Abgasgegendruckes dazu, dass das Abgas nun erfindungsgemäß auch über wesentlich längere Wegstrecken durch den Wärmetauscher geleitet werden kann, so dass zwangsläufig eine deutlich verbesserte Wärmeübertragung gegeben ist. In dieser Figur 6 wird besonders deutlich sichtbar, dass die mit Schneckenwendeln 13 versehenen Stützrohre 12 über Revisionsflansche 16 mit dem Doppelmantelrohr 10 lösbar verbunden sind.
Diese lösbare Anordnung ermöglicht ein Herausziehen der mit Schneckenwendeln versehenen Stützrohre aus dem Doppelmantelrohr und gewährleistet somit einen minimalen Wartungsaufwand beim Reinigen des Wärmetauschers.
Der im untersten, dem dritten Doppelmantelrohr 10 angeordnete nachgeschaltete Schalldämpfer 14 mit axialem Abgasaustritt 21 bewirkt gegenüber eines zwischengeschalteten Schalldämpfers eine deutliche Verringerung des Abgasgegendruckes bei einer sehr effektiven Schallreduzierung. Besonders vorteilhaft wirkt es sich auf eine Minimierung des Abgasgegendruckes aus, wenn im Doppelmantelrohr mit den darin angeordneten Schalldämpfungselementen unmittelbar nach dem Abgaseintritt ein Teilstück der erfindungsgemäßen Schneckenwendel jedoch mit vorzugsweise sich in Strömungsrichtung vergrößerndem Anstieg angeordnet wird.
Die Schalldämpfungselemente 15 selbst sind nahe dem Innenrohr untereinander gekoppelt und über einen Revisionsflansch 16 mit dem Doppelmantelrohr 10 lösbar verbunden.
Auf Grund dieser lösbaren Anordnung der Schalldämpfungselemente im Doppelmantelrohr wird ein Herausziehen derselben aus dem Doppelmantelrohr ermöglicht, und somit eine einfache Reinigung und Wartung der Schalldämpfungselemente gewährleistet.
Durch die Anordnung des Schalldämpfers in dem von Kühlmittel zuerst durchflossenen Doppelmantelrohr kann auch die dort noch vorhandene "Restabwärme" optimal einer Wiederverwendung zugeführt werden.
Auf Grund der das Bauvolumen in seiner Gesamtheit optimal ausnutzenden erfindungsgemäßen Lösung kann bei deutlich reduziertem Abgasgegendruck eine optimale Wärmeübertragung bei minimalem Platzbedarf gewährleistet werden.

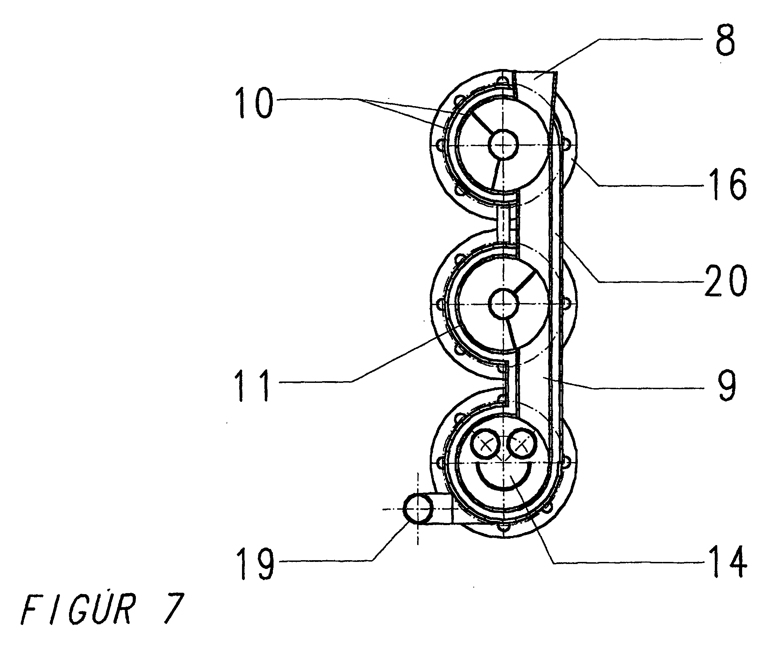

Die Figur 7 zeigt nun die Vorderansicht des erfindungsgemäßen schallgedämmten Abgaswärmetauscher gemäß Figur 6 im Schnitt bei A - A mit gerader tangentialer Abgasführung.
In dieser Schnittdarstellung wird deutlich, dass ebenso wie der Abgaseintritt 8 und die Abgasführung 9 auch der Kühlmitteleintritt 19 und die Kühlmittelführung 20 zwischen den Doppelmantelrohren 10 des schallgedämmten Abgaswärmetauschers tangential erfolgt.
Auf Grund dieser tangentialen Kühlmitteleinleitung wird eine "Umwirbelung" des Innenrohres 11 mittels des Kühlmittels bewirkt, wodurch eine Verbesserung der Wärmeableitung erreicht wird.

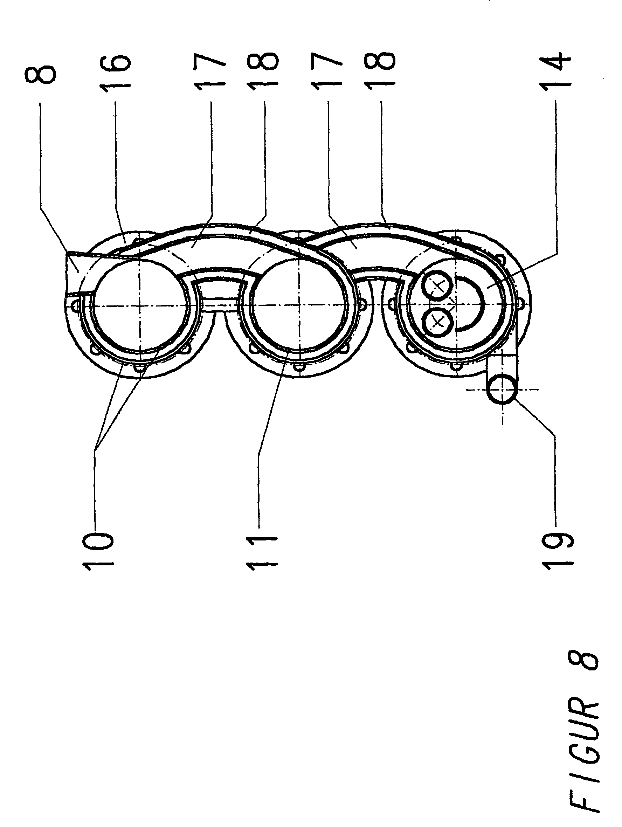

In der Figur 8 ist nun ein erfindungsgemäßer, schallgedämmter Abgaswärmetauscher in der Vorderansicht (im Schnitt bei A - A gemäß Figur 6) mit tangentialer, bogenförmiger Abgasführung dargestellt.
In dieser. Figur 8 wird neben der erfindungsgemäßen tangentialen, bogenförmigen Abgasführung im Abgasbogen 17, die den Abgasbogen ummantelnde Kühlmittelführung, der Kühlmittelbogen 18, besonders gut sichtbar.
Der Vorteil dieser speziellen erfindungsgemäßen Ausführungsform besteht darin, dass die bereits beschriebenen erfindungsgemäßen Wirkungen durch die bogenförmige Ausführungsform verstärkt zum Tragen kommen.

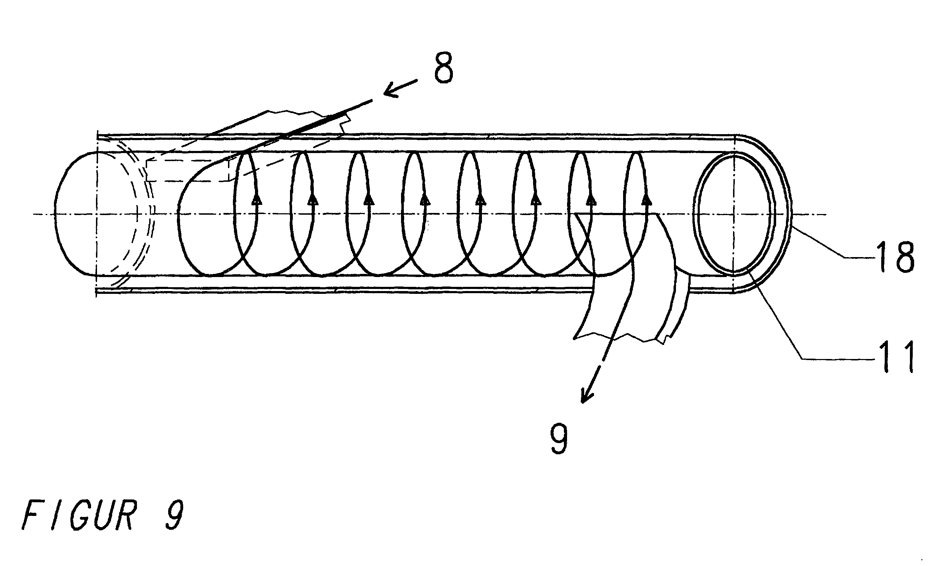

Die Figur 9 zeigt in einer schematische Darstellung die Abgasströmung im Innenrohr 11 des Doppelmantelrohres des schallgedämmten Abgaswärmetauschers, auf Grund der auf einem Stützrohr angeordneten Schneckenwendel, mit tangentialem Abgaseintritt 8 sowie mit tangentialer Abgasführung 9 in das benachbarte Doppelmantelrohr.

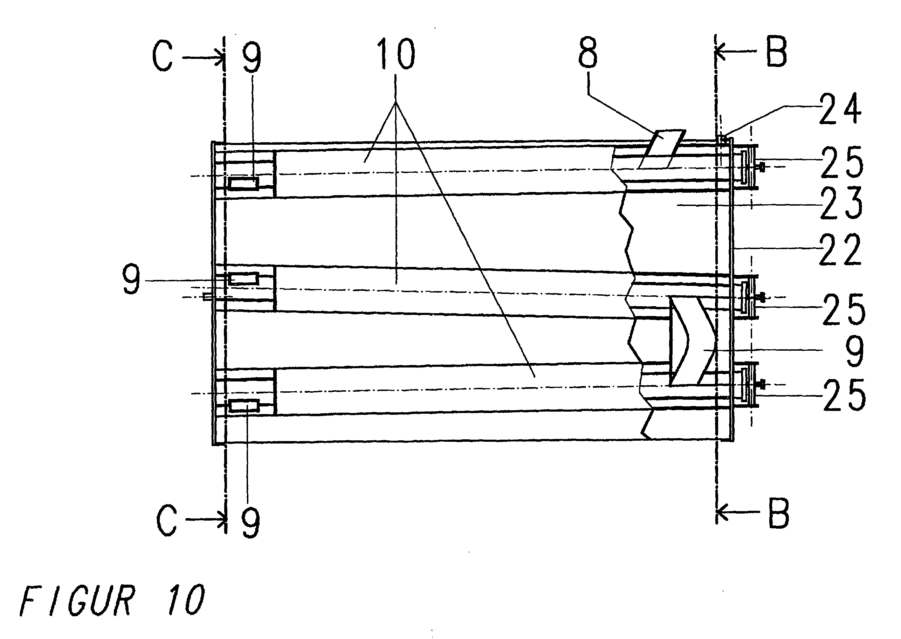

In der Figur 10 ist die Vorderansicht eines erfindungsgemäßen separaten Abgaswärmetauscher im Teilschnitt dargestellt.

Dieser separate, als eigenständige Einheit aufgebaute Abgaswärmetauscher ist von einem Gehäuse 22 umgeben in welchem Dämmstoff 23 angeordnet ist.
Die dadurch bedingte Verringerung der Wärmeabstrahlung bewirkt eine zusätzliche Erhöhung des Wirkungsgrades des erfindungsgemäßen Wärmetauschers. Neben den Schnellverschlüssen 25 sind in der Figur 10 auch der erfindungsgemäße dem Anstieg der Schneckenwendel zuzuordnende geneigte Abgaseintritt 8, die horizontalen und vertikalen Abgasführungen 9 wie auch die in Abgasströmungsrichtung geneigt angeordneten Doppelmantelrohre 10 dargestellt.

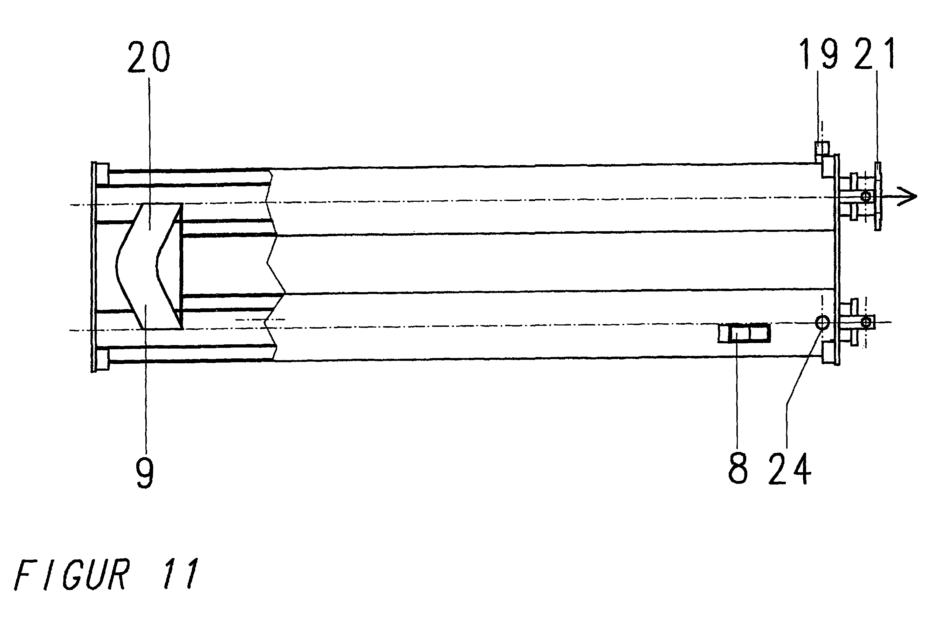

Die Figur 11 zeigt die Draufsicht auf den in der Figur 10 dargestellten erfindungsgemäßen separaten Abgaswärmetauscher im Teilschnitt mit dem Abgaseintritt 8 und der Abgasführung 9 mit Kühlmittelführung 20.

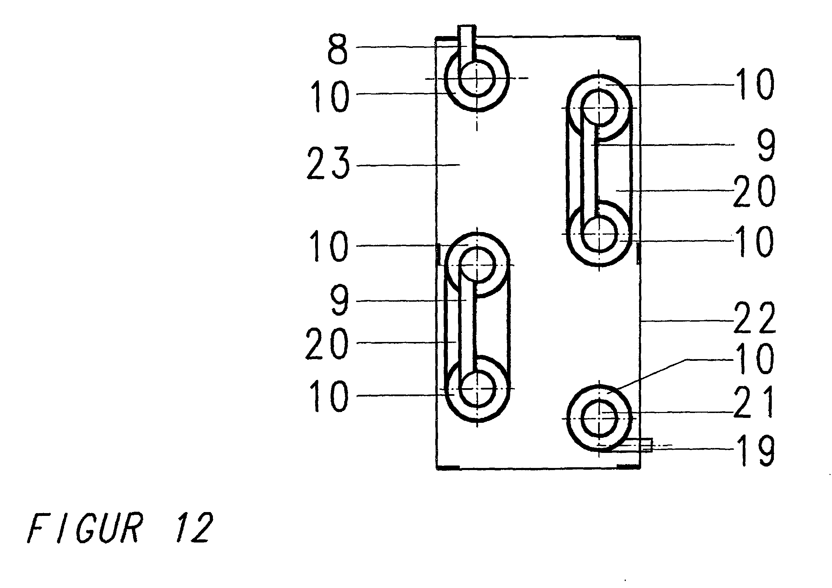

In der Figur 12 ist nun die Seitenansicht des, im mit Dämmstoff 23 versehen Gehäuse 22 angeordneten erfindungsgemäßen, separaten Abgaswärmetauschers gemäß Figur 10 im Schnitt bei B - B dargestellt.
Die in Reihe geschalteten, mit einem Abgaseintritt 8 und einem Abgasaustritt 21 versehenen, in Abgasströmungsrichtung geneigt angeordneten Doppelmantelrohre 10 werden aufeinanderfolgend mit Schneckenwendeln wechselnder Anstiegsrichtung bestückt ( d.h. auf eine rechtssteigende Wendel folgt eine linkssteigende Wendel).
Unmittelbar der Schnittebene B - B benachbart, sind die Doppelmantelrohre 10 miteinander durch vertikale Abgasführungen 9 und im Gegenstromprinzip verlaufende vertikale Kühlmittelführungen 20 verbunden.
Der Kühlmitteleintritt 19 erfolgt im Bereich des Abgasaustrittes 21, so dass dadurch auch eine optimale Nutzung der zur Verfügung stehenden Wärmemenge gewährleistet ist.

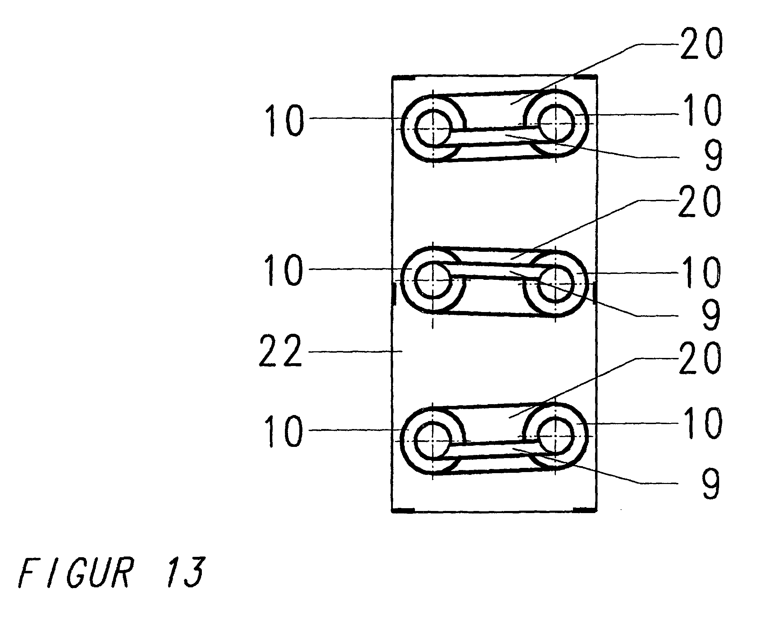

Die Figur 13 zeigt die Seitenansicht des erfindungsgemäßen, in einem Gehäuse 22 angeordneten, separaten Abgaswärmetauscher gemäß Figur 10 im Schnitt bei C - C. Unmittelbar der Schnittebene C - C benachbart, sind die in Reihe geschalteten Doppelmantelrohre 10 miteinander durch horizontale Abgasführungen 9 und im Gegenstromprinzip verlaufende vertikale Kühlmittelführungen 20 verbunden.

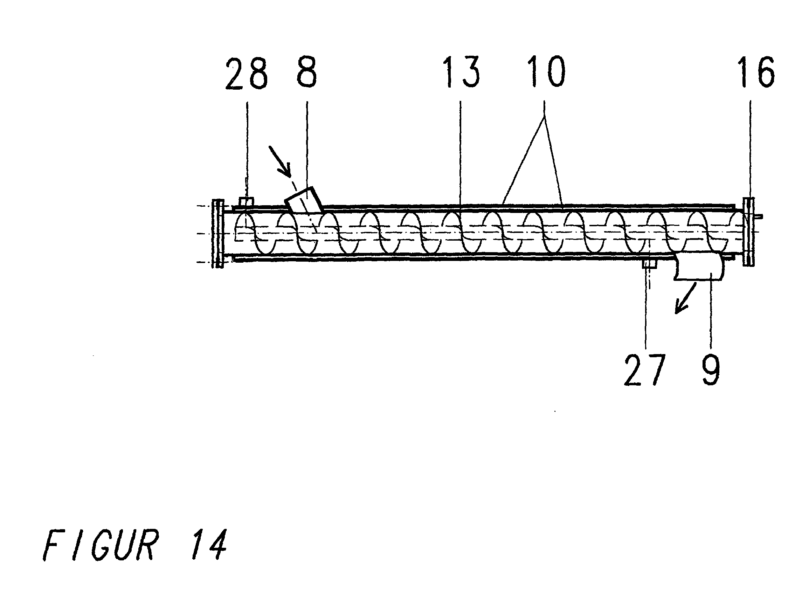

In der Figur 14 ist die Seitenansicht eines zur Dampferzeugung Anwendung findenden Doppelmantelrohres des erfindungsgemäßen Abgaswärmetauschers im Teilschnitt dargestellt.
Der Abgaseintritt 8 der vom Verbrennungsmotor kommenden Abgase erfolgt dabei in das in seinen Wandungen speziell für Heißdampf dimensionierte Doppelmantelrohr mit separaten Kondensateintritt 27 und Dampfaustritt 28.
Die aus diesem verstärkten Doppelmantelrohr 10 abgeleiteten Abgase werden über eine Abgasführung 9 weiteren Doppelmantelrohren zugeleitet, die beispielsweise an einem Warmwasserkreislauf angeschlossen sein können. Durch die in den Doppelmantelrohren mit Revisionsflanschen 16 auf Stützrohren angeordneten Schneckenwendel 13, in Verbindung mit der erfindungsgemäßen tangentialen Abgasführung, wird der Abgasgegendruck selbst beim Vorschalten eines solchen Verdampfers zur Heißdampferzeugung nicht unzulässig erhöht.
Der wesentliche Vorteil einer solchen Anordnung besteht darin, dass vom Abgaswärmetauscher neben dem Warmwasserkreislauf auch gleichzeitig ein Dampfkreislauf bedient werden kann. Dadurch wird für den Anwender nicht nur der Platzbedarf minimiert, sondern es entfallen zudem auch die für einen Verdampfer mit seinen speziellen, kostenaufwendigen Heißmotoren erforderlichen zusätzlichen Kosten.
Auf Grund der erfindungsgemäßen Lösung ist es somit gelungen einen strömungsoptimierten Abgaswärmetauscher zu entwickeln, welcher eine optimale Wärmeübertragung, eine definierte Rußabscheidung und eine wesentliche Reduzierung des Abgasgegendruckes bei minimalem Platzbedarf gewährleistet, so dass dieser nicht nur zur Warmwasserbereitung, sondern sehr vielseitig beispielsweise auch gleichzeitig zur Heißdampferzeugung oder aber auch als Verdampfer für Kälteanlagen eingesetzt werden kann.

## Patentansprüche

1. Abgaswärmetauscher (5), insbesondere für Blockheizkraftwerke, mit einem zwischen. den Wandungen eines Doppelmantelrohres angeordnetem Wärmeübertragungsmittel, wobei der Abgaswärmetauscher (5) aus mehreren Doppelmantelrohren (10) besteht, in deren Innenrohre (11) sich auf Stützrohren (12) angeordnete Schneckenwendel (13) mit von Doppelmantelrohr (10) zu Doppelmantelrohr (10) wechselnder "Anstiegsrichtung" befinden, wobei der Abgaseintritt (8) in den Abgaswärmetauscher (5) wie auch die Abgasführung (9) von einem zum nächsten Doppelmantelrohr (10) tangential erfolgt.

2. Abgaswärmetauscher, insbesondere für Blockheizkraftwerke, nach Anspruch 1, **dadurch gekennzeichnet, daß** der Abgaseintritt (8) in den Abgaswärmetauscher (5) und die Abgasführung (9) zum nachgeschalteten Doppelmantelrohr (10) nicht nur tangential sondern gleichzeitig auch in Strömungsrichtung zur Längsachse des Doppelmantelrohres (10) in Richtung der Steigung der Schneckenwendel (13) des Abgaswärmetauschers geneigt erfolgt.

3. Abgaswärmetauscher, insbesondere für Blockheizkraftwerke, nach Anspruch 1, **dadurch gekennzeichnet, daß** unmittelbar nach dem Abgaseintritt (19) in das jeweilige Doppelmantelrohr (10) ein Teilstück der auf einem Stützrohr (12) angeordneten Schneckenwendel (13) mit einem sich in Strömungsrichtung vergrößernden Anstieg versehen ist.

4. Abgaswärmetauscher (5), insbesondere für Blockheizkraftwerke, nach Anspruch 1, **dadurch gekennzeichnet, daß** die Doppelmantelrohre (10) in Abgasströmungsrichtung geneigt angeordnet sind.

5. Abgaswärmetauscher (5), insbesondere für Blockheizkraftwerke, nach Anspruch 1, **dadurch gekennzeichnet, daß** den mit den auf Stützrohren (12) angeordneten Schneckenwendel (13) versehenen Doppelmantelrohren (10) ein oder mehrere Doppelmantelrohre (10) nachgeschaltet sind, in denen Schalldämpfungselemente (15) angeordnet sind.

6. Abgaswärmetauscher (5), insbesondere für Blockheizkraftwerke, nach Anspruch 1, **dadurch gekennzeichnet, daß** die auf Stützrohren (12) angeordneten Schneckenwendel (13) mit den Revisionsflanschen (16) starr verbunden sind, und diese Revisionsflansche (16) mittels Schnellverschlüssen (25) mit dem Doppelmantelrohr (10) lösbar verbunden werden können.

7. Abgaswärmetauscher (5), insbesondere für Blockheizkraftwerke, nach Anspruch 1, daß ebenso wie der Abgaseintritt (8) und Abgasaustritt auch der Kühlmitteleintritt (19) und der Kühlmittelaustritt der Doppelmantelrohre (10) des Abgaswärmetauschers (5) tangential zum Außenmantel des Doppelmantelrohres (10) und gleichzeitig zur Längsachse des Doppelmantelrohres (10) in Strömungsrichtung geneigt erfolgt.

8. Abgaswärmetauscher (5), insbesondere für Blockheizkraftwerke, nach Anspruch 1, **dadurch gekennzeichnet, daß** in Sonderbauformen der Abgaseintritt (8) der vom Verbrennungsmotor (3) kommenden Abgase zuerst in ein in seinen Wandungen speziell für Heißdampf dimensioniertes Doppelmantelrohr (10) mit separaten Kondensateintritt und Dampfaustritt erfolgt, wobei die aus diesem verstärkten Doppelmantelrohr abgeleiteten Abgase weiteren Doppelmantelrohren zugeleitet werden können, die dann an einem Warmwasserkreislauf angeschlossen sind.

9. Abgaswärmetauscher (5), insbesondere für Blockheizkraftwerke, nach Anspruch 1, **dadurch gekennzeichnet, daß** für spezielle Einsatzfälle an den Doppelmantelrohren (10) der Kühlmitteleinlassquerschnitt kleiner als der Kühlmittelauslassquerschnitt ausgebildet ist

10. Abgaswärmetauscher (5), insbesondere für Blockheizkraftwerke, nach Anspruch 1, **dadurch gekennzeichnet, daß** bei unter- und nebeneinander angeordneten Doppelmantelrohren (10) diese in Reihe geschaltet sowohl horizontal wie auch vertikal, radial miteinander verbunden sind.

11. Abgaswärmetauscher (5), insbesondere für Blockheizkraftwerke, nach Anspruch 1, **dadurch gekennzeichnet, daß** der gesamte Abgaswärmetauscher (5) als separate Einheit aufgebaut ist und mit einer Wärmeisolierung versehen sein kann.

12. Abgaswärmetauscher (5), insbesondere für Blockheizkraftwerke, nach Anspruch 4, **dadurch gekennzeichnet, daß** an einem oder an mehreren der unter- und / oder nebeneinander angeordneten und in Reihe geschalteten Doppelmantelrohre (10) des Abgaswärmetauschers (5), mit in Strömungsrichtung des Abgases versehenem Gefälle, jeweils ein Kondensatablauf (26) angeordnet sein kann.

13. Abgaswärmetauscher (5), insbesondere für Blockheizkraftwerke, nach Anspruch 5, **dadurch gekennzeichnet, daß** als Schalldämpfungselemente (15) im Innenrohr (11) mehrere Rohrstücke gleichen und oder unterschiedlichen Durchmessers zueinander versetzt angeordnet sind.

14. Abgaswärmetauscher (5), insbesondere für Blockheizkraftwerke, nach Anspruch 5, **dadurch gekennzeichnet, daß** die Schalldämpfungselemente (15) einen großen Durchlassquerschnitt aufweisen, und zudem mit Bohrungen quer zur Abgasströmungsrichtung versehen sind.

15. Abgaswärmetauscher (5), insbesondere für Blockheizkraftwerke, nach Anspruch 5, **dadurch gekennzeichnet, daß** die Schalldämpfungselemente (15) miteinander gekoppelt und vorzugsweise mit Revisionsflanschen (16) starr verbunden sind, wobei auch diese Revisionsflansche (16) mittels Schnellverschlüssen (25) mit dem Doppelmantelrohr (10) lösbar verbunden werden können.

16. Abgaswärmetauscher (5), insbesondere für Blockheizkraftwerke, nach Anspruch 11, **dadurch gekennzeichnet, daß** der schallgedämmte Abgaswärmetauscher (5) in einem Blockheizkraftwerk integriert, am Grundrahmen (1) unterhalb des Verbrennungsmotors (3) horizontal angeordnet ist.

17. Abgaswärmetauscher (5), insbesondere für Blockheizkraftwerke, nach Anspruch 11, **dadurch gekennzeichnet, daß** der schallgedämmte Abgaswärmetauscher (5) in einem Blockheizkraftwerk integriert, am Grundrahmen (1) senkrecht neben dem Verbrennungsmotor (3) angeordnet ist.

18. Abgaswärmetauscher (5), insbesondere für Blockheizkraftwerke, nach Anspruch 11, **dadurch gekennzeichnet, daß** der schallgedämmte Abgaswärmetauscher (5) in einem Blockheizkraftwerk integriert, oberhalb des Verbrennungsmotors (3) horizontal angeordnet ist.

## Claims

1. Waste gas heat exchanger (5), especially for block combined heating and power stations, with a heat transfer medium arranged between the walls of a double-jacket tube, where the waste gas heat exchanger (5) consists of several double-jacket tubes (10) in whose inner walls (11) there are spirals supported on support tubes (12) with the direction of ascent changing from double-jacket tube (10) to double-jacket tube (10), with the waste gas inlet or entry (8) entering the waste gas heat exchanger (5) as well as the waste gas guidance tangentially from one double-jacket tube (10) to the next.

2. Waste gas heat exchanger (5), especially for block combined heating and power stations, as per claim 1, distinguished by the fact that the waste gas inlet or entry (8) into the waste gas heat exchanger (5) and the waste gas guidance (9) to the following double-jacket tube (10) is not only tangential, but simultaneously also takes place inclined - in the direction of flow - to the longitudinal axis of the double-jacket tube (10) in the direction of the ascent of the spiral (13) of the waste gas heat exchanger.

3. Waste gas heat exchanger (5), especially for block combined heating and power stations, as per claim 1, distinguished by the fact that immediately after the waste gas inlet or entry (19) into the relevant double-jacket tube (10), a part of the spiral (13) arranged on a support tube (12) has an increasing rise in the direction of flow.

4. Waste gas heat exchanger (5), especially for block combined heating and power stations, as per claim 1, distinguished by the fact that the double-jacket tubes (10) are arranged inclined in the direction of flow of the waste gas.

5. Waste gas heat exchanger (5), especially for block combined heating and power stations, as per claim 1, distinguished by the fact that after the double-jacket tubes that are equipped with spirals (13) supported on support tubes (12), there are one or more double-jacket tubes (10) in which there are noise suppression elements (15).

6. Waste gas heat exchanger (5), especially for block combined heating and power stations, as per claim 1, distinguished by the fact that the spirals (13) supported on support tubes (12) are rigidly joined to the inspection flanges (16), and these inspection flanges (16) can be detachably connected with the double-jacket tube (10) using rapid fasteners (25).

7. Waste gas heat exchanger (5), especially for block combined heating and power stations, as per claim 1, in which, just like the waste gas inlet (8) and waste gas outlet, the coolant inlet (19) and coolant outlet of the double-jacket tubes (10) of the waste gas heat exchanger (5) is tangential to the outer jacket of the double-jacket tube (10) and simultaneously inclined to the longitudinal axis of the double-jacket tube (10) in the direction of flow.

8. Waste gas heat exchanger (5), especially for block combined heating and power stations, as per claim 1, distinguished by the fact that in special constructional forms, the waste gas entry (8) of the waste gases coming from the combustion engine (3) is first into a double jacket tube (10) whose walls are specially dimensioned for superheated steam, with separate condensate inlet and steam outlet, where the waste gases being let out of these double-jacket tubes can be fed to additional double-jacket tubes , which are then connected to a hot water circuit.

9. Waste gas heat exchanger (5), especially for block combined heating and power stations, as per claim 1, distinguished by the fact that for special usage cases, the coolant inlet cross-section at the double-jacket tubes (10) is kept less than the coolant outlet cross-section.

10. Waste gas heat exchanger (5), especially for block combined heating and power stations, as per claim 1, distinguished by the fact that in case of double-jacket tubes (10) arranged one below another and next to each other, they are radially connected to each other, both horizontally and vertically, in series.

11. Waste gas heat exchanger (5), especially for block combined heating and power stations, as per claim 1, distinguished by the fact that the entire waste gas heat exchanger (5) is constructed as a separate unit and can be provided with heat insulation.

12. Waste gas heat exchanger (5), especially for block combined heating and power stations, as per claim 4, distinguished by the fact that at one or more of the double-jacket tubes (10) of the waste gas heat exchanger (5), which are arranged one below another and/or next to each other, and connected in series, with a drop provided in the direction of flow of the waste gases, there can be one condensate run-off (26) fitted.

13. Waste gas heat exchanger (5), especially for block combined heating and power stations, as per claim 5, distinguished by the fact that there are several pieces of tube of the same of different diameters arranged displaced with respect to one another as noise damping elements (15) in the inner tube (11).

14. Waste gas heat exchanger (5), especially for block combined heating and power stations, as per claim 5, distinguished by the fact that the noise damping elements (15) have a large through-pass diameter and in addition, are equipped with holes lateral to the direction of flow of the waste gas.

15. Waste gas heat exchanger (5), especially for block combined heating and power stations, as per claim 5, distinguished by the fact that the noise damping elements (15) are coupled to one another and preferably are rigidly connected with inspection flanges (16), and where these inspection flanges (16) can be detachably joined to the double-jacket tube (10) with rapid fasteners.

16. Waste gas heat exchanger (5), especially for block combined heating and power stations, as per claim 11, distinguished by the fact that the noise-damped waste gas heat exchanger (5) is integrated in a block combined heating and power station and placed on the base frame (1) below the internal-combustion engine (3).

17. Waste gas heat exchanger (5), especially for block combined heating and power stations, as per claim 11, distinguished by the fact that the noise-damped waste gas heat exchanger (5) is integrated in a block combined heating and power station, and arranged on the base frame (1) vertically next to the internal-combustion engine (3).

18. Waste gas heat exchanger (5), especially for block combined heating and power stations, as per claim 11, distinguished by the fact that the noise-damped waste gas heat exchanger (5) is integrated in a block combined heating and power station, and arranged on the base frame (1) horizontally above the internal-combustion engine (3).

## Revendications

1. Echangeur thermique de gaz de rejet (5), en particulier pour les centrales thermiques en montage-bloc avec chauffage à distance, avec un produit de transmission de chaleur disposé entre les parois de conduits tubulaires à double-paroi (10), bien que l'échangeur thermique de gaz de rejet (5) se compose de plusieurs conduits tubulaires à double-paroi (10), dans les conduits intérieurs (11) desquels se trouvent des hélices à vis (13) ordonancées sur des conduits de support (12) dans « un sens alterné de montée » de conduits tubulaires à double-paroi (10) à conduits tubulaires à doubles-parois (10), bien que l'entrée des gaz de rejet (8) dans l'échangeur thermique de gaz de rejet (5) comme la conduite des gaz de rejet (9), se réalise de manière tangentielle par rapport à un conduit tubulaire à double-paroi (10) vers le suivant.

2. Echangeur thermique de gaz de rejet ; en particulier pour les centrales thermiques en montage-bloc avec chauffage à distance, selon la revendication 1 caractérisée en cela par le fait que l'entrée de gaz de rejet (8) dans l'échangeur thermique de gaz de rejet (5) et dans la conduite des gaz de rejet (9) vers le conduit tubulaire à double-paroi (10) ne se réalise pas uniquement de manière tangentielle mais simultanément inclinée dans le sens du flux par rapport à l'axe longitudinal du conduit tubulaire à double-paroi (10), dans le sens de la montée des hélices à vis (13) de l'échangeur thermique de gaz de rejet.

3. Echangeur thermique de gaz de rejet ; en particulier pour les centrales thermiques en montage-bloc avec chauffage à distance, selon la revendication 1 **caractérisée en** cela par le fait que juste après l'entrée de gaz de rejet (19) dans le conduit tubulaire à double-paroi (10) concerné, une partie de l'hélice à vis (13) ordonnancée sur le conduit de support (12) est munie d'une rampe de montée croissante dans le sens du flux.

4. Echangeur thermique de gaz de rejet (5) en particulier pour les centrales thermiques en montage-bloc avec chauffage à distance, selon la revendication 1 **caractérisée en** cela par le fait que les conduits tubulaires à double-paroi (10) sont ordonnancés dans le sens du flux des gaz de rejet.

5. Echangeur thermique de gaz de rejet (5) en particulier pour les centrales thermiques en montage-bloc avec chauffage à distance, selon la revendication 1 **caractérisée en** cela par le fait qu'avec les hélices à vis (13) ordonnancée sur les conduit de support (12), les conduits tubulaires à double-paroi (10) sont raccordés à un ou plusieurs conduits tubulaires à double-paroi (10) dans lesquels sont placés des éléments d'amortissement du bruits.

6. Echangeur thermique de gaz de rejet (5) en particulier pour les centrales thermiques en montage-bloc avec chauffage à distance, selon la revendication 1 **caractérisée en** cela par le fait que les hélices à vis (13) ordonnancée sur les conduit de support (12) sont raccordées de manière rigide avec des brides de révision (16), et que ces brides de révision (16) peuvent être raccordées de manière amovible avec le conduit tubulaire à double-paroi (10) au moyen de raccords rapides (25).

7. Echangeur thermique de gaz de rejet (5) en particulier pour les centrales thermiques en montage-bloc avec chauffage à distance, selon la revendication 1 spécifiant également la manière avec laquelle l'entrée de gaz de rejet (8) et la sortie de gaz de rejet se réalisent de manière inclinée ainsi que l'entrée du produit de refroidissement (19) et la sortie du produit de refroidissement de l'échangeur thermique de gaz de rejet (5) de manière tangentielle par rapport au manteau extérieur du conduit tubulaire à double-paroi (10) et simultanément par rapport à l'axe longitudinal du conduit tubulaire à double-paroi (10) dans le sens du flux.

8. Echangeur thermique de gaz de rejet (5) en particulier pour les centrales thermiques en montage-bloc avec chauffage à distance, selon la revendication 1 **caractérisée en** cela par le fait que dans les formes spéciales de construction, l'entrée de gaz de rejet (8) des gaz de rejet provenant du moteur à combustion (3) se produit en premier lieu dans un conduit tubulaire à double-paroi (10) spécialement dimensionné quant à ses parois pour la vapeur à haute température avec une entrée séparée de condensat et une sortie séparée de vapeur, en tenant compte du fait que les gaz de rejet conduits en dehors du conduit tubulaire à double-paroi peuvent être dirigés dans d'autres conduits tubulaires à double-paroi qui sont alors raccordés à un circuit d'eau chaude.

9. Echangeur thermique de gaz de rejet (5) en particulier pour les centrales thermiques en montage-bloc avec chauffage à distance, selon la revendication 1 **caractérisée en** cela par le fait que dans des cas particuliers d'emploi, la section d'entrée du produit de refroidissement sur le conduit tubulaire à double-paroi (10) est plus petite que la section d'évacuation du produit de refroidissement.

10. Echangeur thermique de gaz de rejet (5) en particulier pour les centrales thermiques en montage-bloc avec chauffage à distance, selon la revendication 1 **caractérisée en** cela par le fait que pour les conduits tubulaires à double-paroi (10) ordonnancés les uns sous les autres et les uns à côté des autres, branchés en série aussi bien à l'horizontale qu'à la verticale, sont raccordés entre-eux de manière radiale.

11. Echangeur thermique de gaz de rejet (5) en particulier pour les centrales thermiques en montage-bloc avec chauffage à distance, selon la revendication 1 **caractérisée en** cela par le fait que l'échangeur thermique de gaz de rejet (5) complet est construit comme une unité séparée et peut être équipé d'une isolation thermique.

12. Echangeur thermique de gaz de rejet (5) en particulier pour les centrales thermiques en montage-bloc avec chauffage à distance, selon la revendication 4 **caractérisée en** cela par le fait que sur un ou plusieurs des conduits tubulaires à double-paroi (10) ordonnancés les uns en dessous des autres ou les uns à côté des autres et branchés en série à l'échangeur thermique de gaz de rejet (5), une évacuation de condensat (26) peut être ordonnancée sur chacun avec une inclinaison prévue dans le sens du flux des gaz de rejet.

13. Echangeur thermique de gaz de rejet (5) en particulier pour les centrales thermiques en montage-bloc avec chauffage à distance, selon la revendication 5 **caractérisée en** cela par le fait que les éléments d'amortissement du bruit (15) dans le conduit intérieur (11) ressemblent à plusieurs pièces tubulaires et, ou alors, que les diamétres différents sont ordonnancés de manière décalée.

14. Echangeur thermique de gaz de rejet (5) en particulier pour les centrales thermiques en montage-bloc avec chauffage à distance, selon la revendication 5 **caractérisée en** cela par le fait que les éléments d'amortissement du bruit (15) présentent une section importante de passage de flux et sont équipés en plus, de perçages transversaux par rapport au sens du flux des gaz de rejet.

15. Echangeur thermique de gaz de rejet (5) en particulier pour les centrales thermiques en montage-bloc avec chauffage à distance, selon la revendication 5 **caractérisée en** cela par le fait que les éléments d'amortissement du bruit (15) sont accouplés les uns avec les autres et sont raccordés des préférence de manière rigide avec des brides de révision (16) bien que les brides de révision (16) puissent être raccordées de manière amovible avec le conduit tubulaire à double-paroi (10) au moyen de raccords rapides (25).

16. Echangeur thermique de gaz de rejet (5) en particulier pour les centrales thermiques en montage-bloc avec chauffage à distance, selon la revendication 11 **caractérisée en** cela par le fait que l'échangeur thermique de gaz de rejet (5) phoniquement isolé, intégré dans une centrale thermique en montage-bloc avec chauffage à distance, est ordonnancé de manière horizontale sur une armature de base (1) sous le moteur à combustion (3).

17. Echangeur thermique de gaz de rejet (5) en particulier pour les centrales thermiques en montage-bloc avec chauffage à distance, selon la revendication 11 **caractérisée en** cela par le fait que l'échangeur thermique de gaz de rejet (5) phoniquement isolé, intégré dans une centrale thermique en montage-bloc avec chauffage à distance, est ordonnancé sur une armature de base (1), verticalement, à côté du moteur à combustion (3).

18. Echangeur thermique de gaz de rejet (5) en particulier pour les centrales thermiques en montage-bloc avec chauffage à distance, selon la revendication 11 **caractérisée en** cela par le fait que l'échangeur thermique de gaz de rejet (5) phoniquement isolé, intégré dans une centrale thermique en montage-bloc avec chauffage à distance, est ordonnancé horizontalement au dessus du moteur à combustion (3).
